# EUROPEAN PATENT SPECIFICATION

(11) **EP 1 160 489 B1**
(45) Date of publication and mention of the grant of the patent: **29.09.2004**
(21) Application number: 01109498.4
(22) Date of filing: 25.04.2001
(51) Int. Cl.: F16H 61/32, F16H 61/20, H01F 7/14

(54) **Shift-assisting device for a transmission**
Servoschaltvorrichtung für Getriebe
Comande de passage de vitesses assistée

(30) Priority: 27.04.2000 JP 2000127897
(43) Date of publication of application: 05.12.2001
(73) Proprietor: ISUZU MOTORS LIMITED, Shinagawa-ku, Tokyo (JP)
(72) Inventor: Yamamoto, Yasushi, 8 Tuchidana, Fujisawa-shi (JP); Iwao, Nobuyuki, 8 Tuchidana, Fujisawa-shi (JP)
(74) Representative: Beetz & Partner Patentanwälte

(56) References cited:
- EP-A- 0 751 322
- EP-A- 0 872 670
- US-A- 4 485 726
- PATENT ABSTRACTS OF JAPAN vol. 1998, no. 13, 30 November 1998 (1998-11-30) & JP 10 213221 A (SUZUKI MOTOR CORP), 11 August 1998 (1998-08-11)
- "ROTARY SOLENOID FOR VALVE BODY HYDRAULIC CONTROLS" RESEARCH DISCLOSURE, KENNETH MASON PUBLICATIONS, HAMPSHIRE, GB, no. 397, 1 May 1997 (1997-05-01), page 275 XP000726400 ISSN: 0374-4353

## Description

### Field of the Invention

The present invention relates to a shift-assisting device for reducing a shifting operation force in changing the speed of a transmission mounted on a vehicle.

### Description of the Prior Art

Large trucks and buses that require a large shifting force for changing the speed have been equipped with a shift-assisting device for executing the shifting operation with a decreased force. The shift-assisting device with which large vehicles are provided, uses generally a compressed air as a source of operation. The shift-assisting device that uses the compressed air as the source of operation, is equipped with a shift actuator comprising a pneumatic pressure cylinder that operates the speed-change operation mechanism coupled to a speed-change lever in the same direction as the direction in which the speed-change lever is shifted. Large vehicles generally use a compressed air as a source for operating the brake and are hence, allowed to use the compressed air for the shift-assisting device. However, small- and medium-sized vehicles that are not equipped with a compressor as a source of the compressed air, cannot be provided with the shift-assisting device that uses a shift actuator which comprises a pneumatic pressure cylinder. In recent years, however, it has been demanded to provide even small- and medium-sized vehicles with the shift-assisting device, and there have been proposed shift-assisting devices using an electric motor as a drive means as disclosed in, for example, Japanese Laid-open Patent Publication (Kokai) No. 87237/1993 (JP-A 5-87237) and Japanese Patent No. 2987121 EP 872670A) which discloses the features of the preamble of claim 1.

In the shift-assisting device using an electric motor, the shifting operation becomes rather heavy when the shifting operation is quickly performed since the electric motor that is a drive means gives a resistance. That is, when the electric motor is used as a drive means, a reduction gear must be provided. This reduction gear, however, creates a large resistance. When the electric motor is used as a drive means, further, the reduction gear that is employed imposes a limitation on decreasing a size of the device as a whole.

### SUMMARY OF THE INVENTION

It is an object of the present invention to provide a shift-assisting device for a transmission, which does not give a resistance even when the shifting operation is quickly performed and makes it possible to decrease a size of the device as a whole.

In order to accomplish the above-mentioned object, the present invention provides a shift-assisting device for a transmission having a drive means for operating a shifting mechanism in the same direction as the direction in which a speed-change lever is shifted, said shifting mechanism being coupled to said speed-change lever to operate a synchronizing mechanism of the transmission, wherein said drive means is a rotary solenoid.

It is desired that the rotary solenoid is disposed on the same axis as that of a control rod mounting the shift lever of the shifting mechanism, and that the rotor of the rotary solenoid is coupled to the control rod.

### BRIEF DESCRIPTION OF THE DRAWINGS

Fig. 1 is a diagram schematically illustrating the constitution of a speed-changing mechanism equipped with a shift-assisting device for a transmission, constituted according to the present invention;
Fig. 2 is a diagram schematically illustrating the constitution of a gear mechanism in the transmission of Fig. 1;
Fig. 3 is a sectional view of a synchronizing mechanism with which the transmission of Fig. 2 is provided;
Fig. 4 is a diagram illustrating shifting patterns of a speed-change lever in the speed-changing mechanism shown in Fig. 1;
Fig. 5 is a sectional view illustrating major portions of a shifting mechanism and shift-assisting device constituting the speed-changing mechanism shown in Fig. 1;
Fig. 6 is a sectional view along the line A-A in Fig. 5;
Fig. 7 is a view illustrating the operation states of the shift-assisting mechanism shown in Fig. 5;
Fig. 8 is a diagram illustrating a relationship between the shift stroke positions of a clutch sleeve in the synchronizing mechanism shown in Fig. 2 and the voltages applied to a rotary solenoid in the shift-assisting device; and
Fig. 9 is a flowchart showing a procedure of shift-assist control operation of a controller that constitutes the shift-assisting device for the transmission according to the present invention.

### DETAILED DESCRIPTION OF THE PREFERRED EMBODIMENTS

A preferred embodiment of the shift-assisting device for a transmission, constituted according to the present invention, will now be described in further detail with reference to the accompanying drawings.

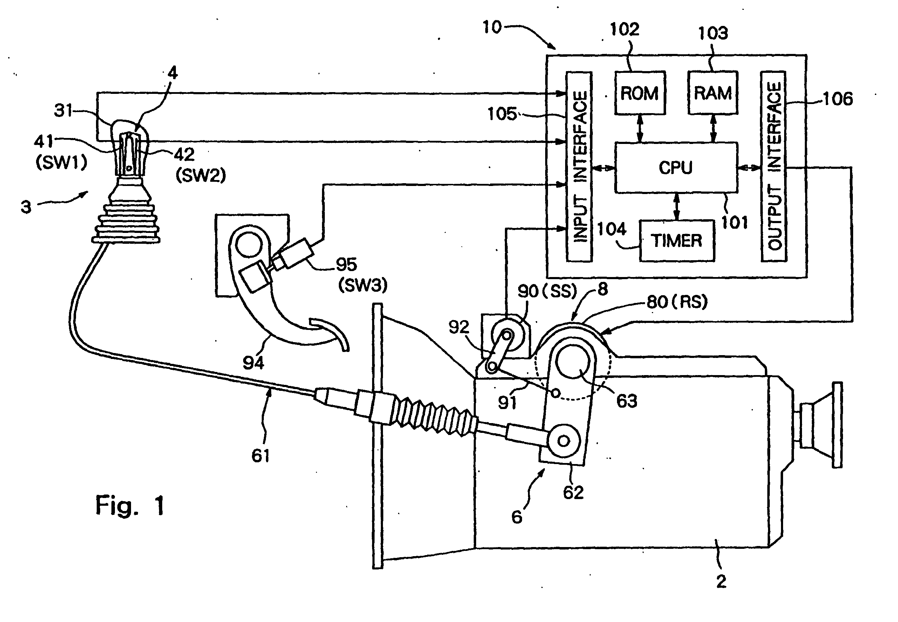

Fig. 1 is a diagram schematically illustrating the constitution of a speed-changing mechanism equipped with a shift-assisting device for a transmission, constituted according to the present invention.

The speed-changing mechanism shown in Fig. 1 comprises a speed-change lever 3 for changing the speed of a transmission 2 equipped with a synchronizing mechanism, a shifting mechanism 6 coupled to the speed-change lever 3, and a shift-assisting device 8 for operating the shifting mechanism 6 in the same direction as the direction in which the speed-change lever 3 is shifted.

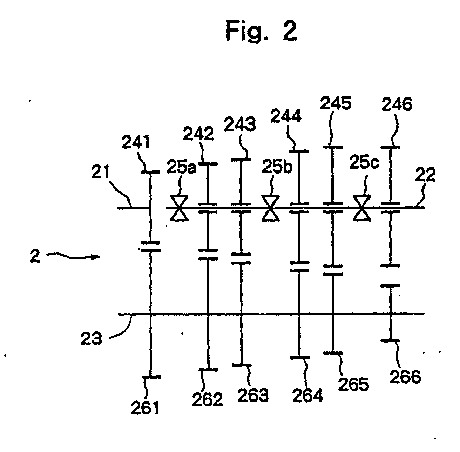

Referring to Fig. 2, the transmission 2 comprises a gear mechanism of five forward speeds and one reverse speed. The transmission 2 has an input shaft 21, an output shaft 22 disposed in concentric with the input shaft 21, and a counter shaft 23 arranged in parallel with the output shaft 22. On the input shaft 21 is mounted a drive gear 241 (a fifth speed gear in the illustrated embodiment), and on the output shaft 22 are rotatably mounted a fourth speed gear 242, a third speed gear 243, a second speed gear 244, a first speed gear 245 and a reverse gear 246. On the output shaft 22 are further disposed synchronizing mechanisms 25a, 25b and 25c between the fifth speed gear 241 and the fourth speed gear 242, between the third speed gear 243 and the second speed gear 244 and between the first speed gear 245 and the reverse gear 246, respectively. On the counter shaft 23, there are arranged counter gears 261, 262, 263, 264 and 265 that are in mesh with the fifth speed gear 241, fourth speed gear 242, third speed gear 243, second speed gear 244 and first speed gear 245 at all times, as well as a counter gear 266 that is in mesh with the reverse gear 246 via an idling gear that is not shown.

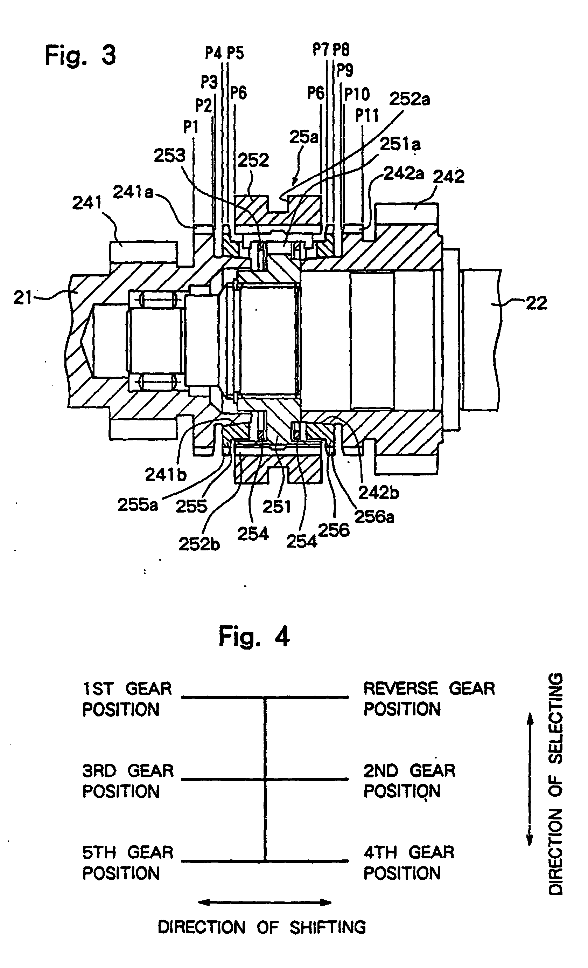

Next, the synchronizing mechanisms 25a, 25b and 25c will be described with reference to Fig. 3. The illustrated synchronizing mechanisms 25a, 25b and 25c are all constituted substantially in the same manner. Therefore, described below is only the synchronizing mechanism 25a that is disposed between the fifth speed gear 241 and the fourth speed gear 242.

The illustrated synchronizing mechanism 25a is a known key-type synchronizing mechanism which comprises a clutch hub 251 mounted on the output shaft 22, a clutch sleeve 252 slidably fitted to an external gear spline formed on the outer circumference of the clutch hub 251, keys 253 arranged in plural (e.g., three) key grooves 251a formed in the clutch hub 251 in the radial direction thereof, key springs 254, 254 arranged on the inner sides at both ends of the keys 253 to push the keys 253 toward the clutch sleeve 252, dog teeth 241a and 242a formed on the fifth speed gear 241 and on the fourth speed gear 242, and synchronizer rings 255 and 256 disposed on the conical surfaces 241b and 242b formed on the fifth speed gear 241 and on the fourth speed gear 242. A shift fork that will be described later is fitted into an annular groove 252a formed in the outer circumference of the clutch sleeve 252 of the thus constituted synchronizing mechanism 25a, the shift fork being mounted on a shift rod of a shifting mechanism. The clutch sleeve 252 is slid by the shift fork toward either the right direction or the left direction in the drawing, whereby the spline 252b of the clutch sleeve 252 is brought into mesh with the teeth 255a of the synchronizer ring 255 and dog teeth 241a or with the teeth 256a of the synchronizer ring 256 and dog teeth 242a. The illustrated synchronizing mechanism is constituted in a known manner and hence, is not described here in further detail.

The above-mentioned synchronizing mechanisms 25a, 25b and 25c are operated by the speed-change lever 3 and by the shifting mechanism 6 connected to the speed-change lever 3. The speed-change lever 3 is so constituted as can be tilted in a direction (i.e., selecting direction) perpendicular to the surface of the paper in Fig. 1 and in the right-and-left direction (i.e., shifting direction) on a shaft that is not shown as a center. In order to operate the synchronizing mechanisms 25a, 25b and 25c, the speed-change lever 3 is operated along speed-change patterns shown in Fig. 4. A shift knob switch 4 is disposed in a knob 31 of the speed-change lever 3. The shift knob switch 4 has a first switch 41 (SW1) and a second switch 42 (SW2) for detecting the direction of operation when the knob 31 of the speed-change lever 3 is tilted to the direction of shifting. The shift knob switch 4 is, for example, so constituted that the first switch 41 (SW1) is turned on when the knob 31 of the speed-change lever 3 is tilted toward the left in Fig. 1 and that the second switch 42 (SW2) is turned on when the speed-change lever 3 is tilted toward the right in Fig. 1. The shift knob switch 4 is further so constituted that when the driver releases the knob 31 of the speed-change lever 3, both the first switch 41 (SW1) and the second switch 42 (SW2) are turned off, and the on and off signals are sent to a controller that will be described later. The above shift knob switch pertains to a known technology as disclosed in, for example, Japanese Laid-open Utility Model Publication (Kokai) No. 97133/1981, and is not described here in further detail.

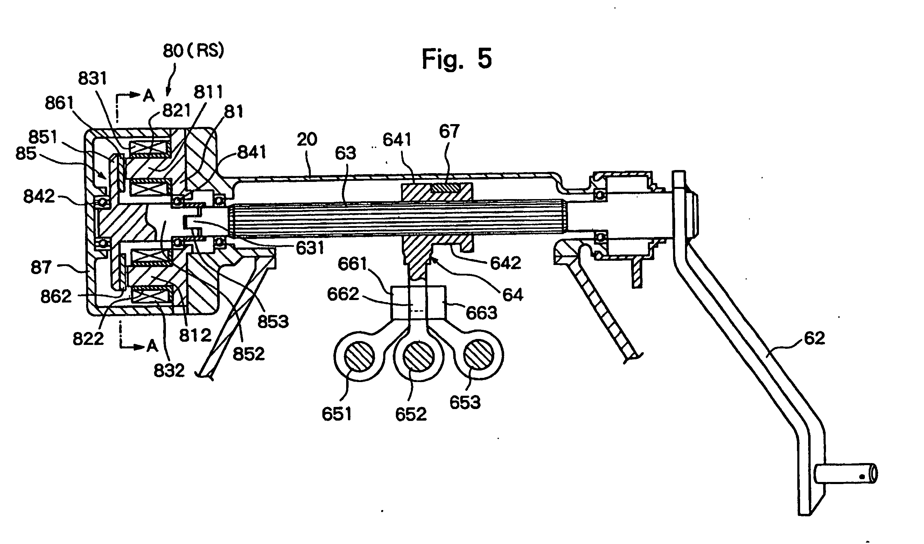

Next, described below with reference to Figs. 1 and 5 is the shifting mechanism 6 that is coupled to the speed-change lever 3 and operates the above-mentioned synchronizing mechanisms 25a and 25b.

The shifting mechanism 6 comprises a push-pull cable 61 that is connected at its one end to the speed-change lever 3, a control lever 62 connected at its one end to the other end of the push-pull cable 61, a control rod 63 that is connected to the other end of the control lever 62 and is rotatably supported by a case cover 20 of the transmission 2, and a shift lever 64 fitted by spline to the control rod 63 so as to slide in the axial direction. The shift lever 64 selectively engages at its end with a shift block 661, 662 or 663 mounted to the shift rods 651, 652 and 653. Shift forks (not shown) are mounted to the shift rods 651, 652 and 653, and engage with the annular grooves formed in the outer circumferences of the clutch sleeves of the synchronizing mechanisms 25a, 25b and 25c. The shift lever 64 is provided with a fitting groove 642 in the outer peripheral surface of a mounting boss portion 641, and an end of the select lever 67 engages with the fitting groove 642. The select lever 67 is coupled to the speed-change lever 3 through a push-pull cable for selection (not shown) so that, when the speed-change lever 3 is moved toward the selecting direction, the shift lever 64 is slid on the control rod 63 in the axial direction, and the end of the shift lever 64 is brought into selective engagement with the shift block 661, 662 or 663. The shifting mechanism 6 is constituted in a known manner and is not described here in detail.

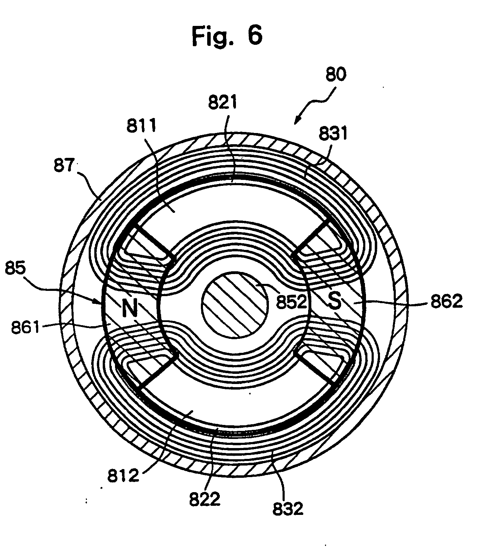

In the illustrated embodiment, there is provided with the shift-assisting device 8 for operating the above-mentioned shifting mechanism 6 in the same direction as the direction in which the speed-change lever 3 is shifted. The shift-assisting device 8 is equipped with a rotary solenoid 80 (RS) as a drive means. The rotary solenoid 80 (RS) will now be described with reference to Figs. 5 and 6. The rotary solenoid 80 (RS) is a bidirectional rotary solenoid capable of rotating in both the forward direction and the reverse direction by a predetermined angle, and is disposed on the same axis as the control rod 63. The rotary solenoid 80 (RS) comprises a base 81 having a first stator 811 and a second stator 812 mounted on a case cover 20 which rotatably supports the control rod 63, bobbins 821 and 822 mounted respectively on the first stator 811 and on the second stator 812, a first coil 831 and a second coil 832 wound respectively on the bobbins 821 and 822, and a rotor 85 rotatably supported by the base 81 via a bearing 841.

The rotor 85 constituting the rotary solenoid 80 (RS) comprises a disk-like rotor body 851 and a shaft portion 852 provided at the center of the rotor body 851, the shaft portion 852 being rotatably supported by the base 81 via the bearing 841. The rotor body 851 is disposed being opposed to the ends of the first stator 811 and the second stator 812. A first permanent magnet 861 and a second permanent magnet 862 are each mounted on the surfaces thereof opposed to the first stator 811 and the second stator 812. The first permanent magnet 861 is magnetized into the N-pole in its surface on the side opposed to the first stator 811 and the second stator 812 and is magnetized into the S-pole in its surface on the side of the rotor body 851. The second permanent magnet 862 is magnetized into the S-pole in its surface on the side opposed to the first stator 811 and the second stator 812 and is magnetized into the N-pole in its surface on the side of the rotor body 851. A coupling groove 853 is formed in an end of the shaft portion 852 (right end in Fig. 5) constituting the rotor body 851. By coupling the coupling groove 853 with a fitting protuberance 631 formed at an end of the control rod 63, the both are rotatably coupled together to transmit power. Thus, since the shaft portion 852 constituting the rotor body 851 is coupled to the control rod 63 to transmit power, the coupling structure is simple and the device as a whole is constituted in a compact size. In Fig. 5, reference numeral 87 indicates a dust cover covering the above-mentioned members. The dust cover 87 is supported at the other end of the shaft portion 852 constituting the rotor 85 via a bearing 842.

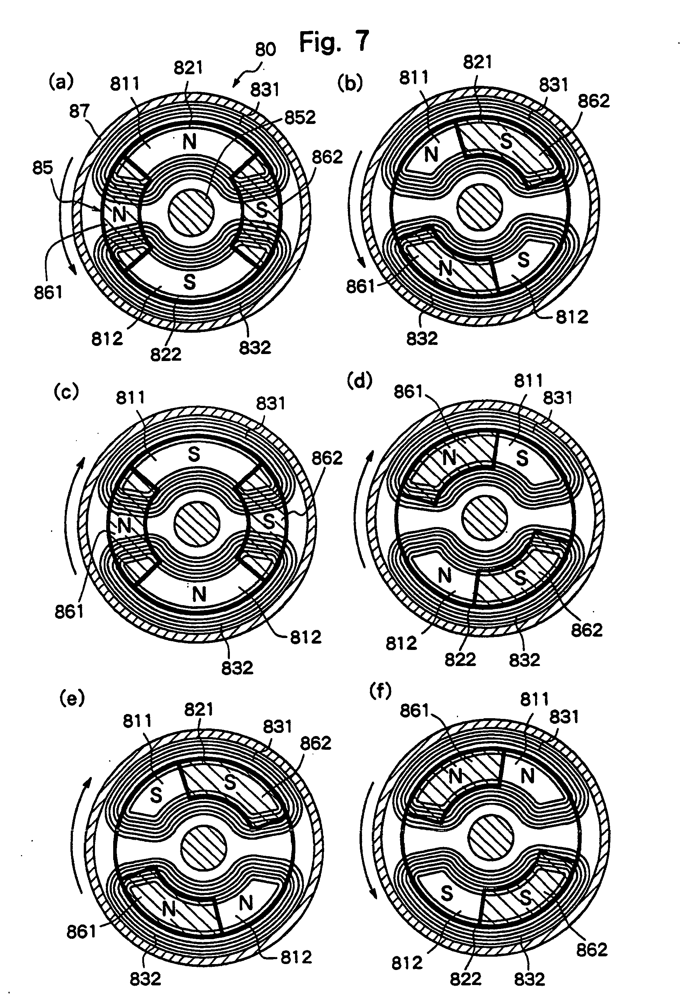

The rotary solenoid 80 (RS) of the illustrated embodiment is constituted as described above, and its operation will now be described with reference to Fig. 6 and Figs. 7(a) to 7(f).

Fig. 6 illustrates a state where the first permanent magnet 861 and the second permanent magnet 862 of the rotor 85 are positioned between the first stator 811 and the second stator 812, and the electric current is supplied to neither the first coil 831 nor to the second coil 832 (OFF state). When the shifting mechanism 6 of the transmission 2 is in the neutral state, the rotary solenoid 80 (RS) is constituted to be located at a position shown in Fig. 6.

In the rotary solenoid 80 (RS) of the state shown in Fig. 6, when a voltage is applied to the first coil 831 so that the first stator 811 becomes the N-pole and a voltage is applied to the second coil 832 so that the second stator 812 becomes the S-pole, the rotor 85 produces a torque so as to rotate in the counterclockwise direction (forward rotation direction) as shown in Fig. 7(a). That is, the N-pole of the first permanent magnet 861 repels the N-pole of the first stator 811, the S-pole of the second permanent magnet 862 repels the S-pole of the second stator 812, the N-pole of the first permanent magnet 861 attracts the S-pole of the second stator 812, and the S-pole of the second permanent magnet 862 attracts the N-pole of the first permanent magnet 861, whereby the rotor 85 produces the torque so as to rotate in the counterclockwise direction (forward rotation direction) in Fig. 7(a). Then, the rotor 85 comes into a halt due to a stopper (not shown) after having rotated by an angle of about 60 degrees as shown in Fig. 7(b) and in this state, the supply of the electric current to the first coil 831 and the second coil is cut (OFF state). The operation of the rotary solenoid 80 (RS) at this moment assists the gear-engage shifting operation of the shift lever 64 toward the side of the first gear position, third gear position and fifth gear position.

In the rotary solenoid 80 (RS) in the state of Fig. 7(a), on the other hand, when a voltage is applied to the first coil 831 so that the first stator 811 becomes the S-pole and a voltage is applied to the second coil 832 so that the second stator 812 becomes the N-pole, the rotor 85 produces a torque so as to rotate in the clockwise direction (reverse rotation direction) as shown in Fig. 7(c). That is, the N-pole of the first permanent magnet 861 repels the N-pole of the second stator 812, the S-pole of the second permanent magnet 862 repels the S-pole of the first stator 811, the N-pole of the first permanent magnet 861 attracts the S-pole of the first stator 811, and the S-pole of the second permanent magnet 862 attracts the N-pole of the second permanent magnet 862, whereby the rotor 85 produces the torque so as to rotate in the clockwise direction (reverse rotation direction) in Fig. 7(c). Then, the rotor 85 comes into a halt due to a stopper (not shown) after having rotated by an angle of about 60 degrees as shown in Fig. 7(d) and in this state, the electric current is no longer supplied to the first coil 831 and the second coil 832 (OFF state). The operation of the rotary solenoid 80 (RS) at this moment assists the gear-engage shifting operation of the shift lever 64 toward the side of the second gear position, fourth gear position and reverse gear position.

Next, when the gear-disengage shifting operation is to be assisted by the rotary solenoid 80 (RS) from the state where the gear is engaged with the first gear position, third gear position or fifth gear position shown in Fig. 7(b), a voltage is applied to the first coil 831 so that the first stator 811 becomes the S-pole and a voltage is applied to the second coil 832 so that the second stator 812 becomes the N-pole as shown in Fig. 7(e). As a result, the N-pole of the first permanent magnet 861 repels the N-pole of the second stator 812, and the S-pole of the second permanent magnet 862 repels the S-pole of the first stator 811 to produce a torque that rotates in the clockwise direction (reverse rotation direction). At a moment when the rotor 85 has rotated to the position of Fig. 7(a), the supply of the electric current to the first coil 831 and the second oil 832 is cut (OFF state).

Further, when the gear-disengage shifting operation is to be assisted by the rotary solenoid 80 (RS) from the state where the gear is engaged with the second gear position, fourth gear position or reverse gear position shown in Fig. 7(d), a voltage is applied to the first coil 831 so that the first stator 811 becomes the N-pole and a voltage is applied to the second coil 832 so that the second stator 812 becomes the S-pole as shown in Fig. 7(f). As a result, the N-pole of the first permanent magnet 861 repels the N-pole of the first stator 811, and the S-pole of the second permanent magnet 862 repels the S-pole of the second stator 812 to produce a torque that rotates in the counterclockwise direction (forward rotation direction). At a moment when the rotor 85 has rotated to the position of Fig. 7(a), the supply of the electric current to the first coil 831 and the second oil 832 is cut (OFF state).

The shift-assisting device 8 in the illustrated embodiment has a shift stroke sensor 90 (SS) for detecting the shift stroke position of the shifting mechanism. The shift stroke sensor 90 is coupled to the control lever 62 via a rod 91 and a lever 92, comprises a potentiometer for detecting the shift stroke position corresponding to the angle of operation of the control lever 62, and sends a detected signal to a controller 10.

The controller 10 is constituted by a microcomputer which includes a central processing unit (PU) 101 for executing the operation according to a control program, a read-only memory (ROM) 102 for storing the control program and a map for controlling the speed of connecting the clutch, that will be described later, a random access memory (RAM) 103 for storing the results of operation, a timer (T) 104, an input interface 105 and an output interface 106. The input interface 105 of the thus constituted controller 10 receives signals detected by the first switch 41 (SW1) and the second switch 42 (SW2) constituting the shift knob switch 4 and a signal detected by the shift stroke sensor 90 (SS). The input interface 105 further receives a signal detected by a clutch pedal switch 95 (SW3) which detects the state of operation of a clutch pedal 94 for operating the clutch disposed between the engine that is not shown and the transmission 2. The clutch pedal switch 95 (SW3) is turned off in a state where the clutch pedal 94 is released, i.e., where the clutch pedal 94 is not depressed (clutch is connected), and produces a signal ON when the clutch pedal 94 is depressed to disconnect the clutch. When an automatic clutch is mounted to automatically disconnect or connect the clutch based on the signals from the shift knob switch 4 and the shift stroke sensor 90 (SS), the input interface 105 receives a signal detected by a clutch stroke sensor that detects the amount of engagement of the clutch instead of the clutch pedal 94. The output interface 106 sends control signals to the rotary solenoid 80 (RS) and the like.

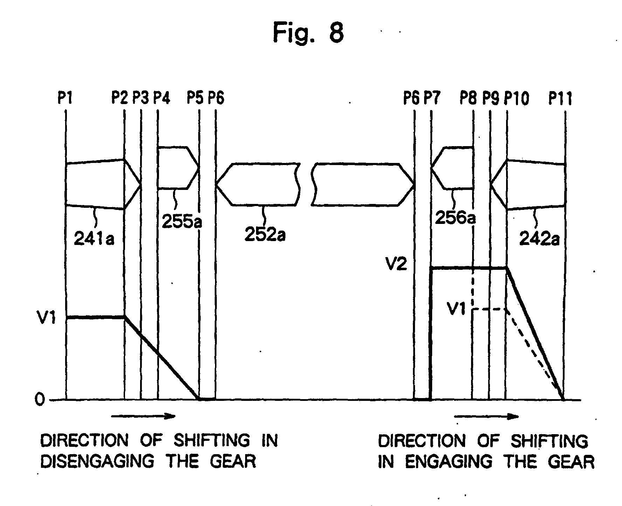

Next, the assisting force corresponding to the shift stroke position will be described with reference to Fig. 8. Fig. 8 illustrates a positional relationship among the spline 252b of the clutch sleeve 252, teeth 255a of the synchronizer ring 255 for the fifth speed gear 241 and dog teeth 241a, teeth 256a of the synchronizer ring 256 for the fourth speed gear 242 and dog teeth 242a in their neutral state. In the embodiment shown in Fig. 8, a shift stroke position of the clutch sleeve 252 in its neutral state is designated at P6. P5 denotes a shift stroke position of the clutch sleeve 252 that is moved from the neutral state toward the fifth speed gear 241 side (toward the left in Fig. 8) and arrives at a front end of the chamfer of the teeth 255a of the synchronizer ring 255 for the fifth speed gear 241, P4 denotes a shift stroke position of the clutch sleeve 252 that arrives at a rear end of the teeth 255a of the synchronizer ring 255, P3 denotes a shift stroke position of the clutch sleeve 252 that arrives at the front end of the chamfer of the dog teeth 241a for the fifth speed gear 241, P2 denotes a shift stroke position of the clutch sleeve 252 that arrives at the rear end of the chamfer of the dog teeth 241a, and P1 denotes a shift stroke position of the clutch sleeve 252 that arrives at the rear end of the dog teeth 241a. On the other hand, P7 denotes a shift stroke position of the clutch sleeve 252 that is moved from the neutral state toward the fourth speed gear 242 side (toward the right in Fig. 8) and arrives at the front end of the chamfer of the teeth 256a of the synchronizer ring 256 for the fourth speed gear 242, P8 denotes a shift stroke position of the clutch sleeve 252 that arrives at the rear end of the teeth 256a of the synchronizer ring 256, P9 denotes a shift stroke position of the clutch sleeve 252 that arrives at the front end of the chamfer of the dog teeth 242a for the fourth speed gear 242, P10 denotes a shift stroke position of the clutch sleeve 252 that arrives at the rear end of the chamfer of the dog teeth 242a, and P11 denotes a shift stroke position of the clutch sleeve 252 that arrives at the rear end of the dog teeth 242a. The shift stroke positions are detected by the shift stroke sensor 90 (SS). In the illustrated embodiment, the shift stroke sensor 90 (SS) is so constituted as to produce a voltage signal of the smallest value when the shift stroke position is P1, to produce the output voltage that gradually increases as the shift stroke position goes to the P11 side, and to produce a voltage signal of the greatest value when the shift stroke position is P11.

In shifting the clutch sleeve 252 from the neutral state shown in Fig. 8 toward either the fourth speed gear 242 side or the fifth speed gear 241 side (in engaging the gears), the greatest operation force acts on the speed-change lever 3 in the synchronizing range of from the shift stroke positions P7 or P5, i.e., from the positions at which the synchronizing action starts up to the shift stroke position P8 or P4 at which the synchronizing action ends. During the gear-engaging operation, therefore, the rotary solenoid 80 (RS) may be driven in at least the synchronizing range to assist the shifting operation. During the gear-engaging operation, further, a relatively large force, which is smaller than that of in the above-mentioned synchronizing range, acts upon the speed-change gear 3 in the engaging range of from the shift stroke position P9 or P3 to the shift stroke position P10 or P2, i.e., in a range where the chamfer of the spline 252b of the clutch sleeve 252 engages with the chamfer of the dog teeth 242a or 241a. During the gear-engaging operation, therefore, it is desired to assist by driving the rotary solenoid 80 (RS) the shifting operation even during the period in which the dog teeth engage with the chamfer of the clutch sleeve. When the clutch sleeve 252 returns to the neutral state from a state of being engaged with the fourth speed gear 242 or the fifth speed gear 241, i.e., from the shift stroke position P11 or P1, further, a relatively large force acts on the speed-change lever 3 during a period until the spline 252b of the clutch sleeve 252 passes through the shift stroke position P10 or P2, i.e., passes through the rear end of the chamfer of the dog teeth. At the time of gear-disengaging operation, therefore, the shifting operation may be assisted by driving the rotary solenoid 80 (RS) during the shift stroke of from the gear-engaged state until the rear end of the chamfer of the dog teeth is passed (i.e., in the range at which the dog teeth are in mesh with the clutch sleeve 252).

The assisting force of during the gear-disengaging operation may be smaller than the assisting force of during the gear-engaging operation. The assisting force is controlled by controlling the voltage or the current fed to the rotary solenoid 80 (RS). The rotation of the rotary solenoid 80 (RS) is, for example, the forward rotation when the clutch sleeve 252 is operated toward the left in Fig. 8 (when the first switch 41 (SW1) of the shift knob switch 4 is turned on) and is, for example, the reverse rotation when the clutch sleeve 252 is operated toward the right in Fig. 8 (when the second switch 42 (SW2) of the shift knob switch 4 is turned on). When, for example, the state where the gear is engaged with the fifth speed gear 241 is to be shifted down to the fourth speed, the rotary solenoid 80 (RS) is reversely driven with a voltage V1 from P1 to P2, i.e., until the spline 252b of the clutch sleeve 252 passes over the rear end of the chamfer of the dog teeth 241a (during a period in which the dog teeth are in mesh with the clutch sleeve 252) as shown in Fig. 8. Then, the voltage is gradually lowered during from P2 to P5 to stop the operation of the rotary solenoid 80 (RS). When the clutch sleeve 252 arrives at P7 at where the synchronizing action starts from the neutral position P6, the rotary solenoid 80 (RS) is reversely driven with a voltage V2 that is higher than the above voltage V1. In the embodiment shown in Fig. 8, the reverse rotation is maintained with the voltage V2 for a period until the spline 252b of the clutch sleeve 252 passes P10 that corresponds to the rear end of the chamfer of the dog teeth 242a. After the clutch sleeve 252 has passed P10, the voltage applied to the rotary solenoid 80 (RS) is gradually lowered to halt the driving of the rotary solenoid 80 (RS) at the shift stroke position P11. During the gear-engaging operation in the embodiment shown in Fig. 8, the voltage applied to the rotary solenoid 80 (RS) may be lowered from V2 down to V1 as indicated by a broken line after the synchronizing period of P8 has elapsed, to drive the rotary solenoid 80 (RS) with a voltage V1 up to P10. In the shift-assisting device of the illustrated embodiment as described above, the assisting force is controlled according to the shift stroke positions. Therefore, no time lag occurs in driving the rotary solenoid, and the force for operating the speed-change lever can be uniformalized over the whole stroke of the shifting operation. Besides, since in the rotary solenoid 80 (RS), all of the coils therein attract or repel each other to produce the torque, the rotary solenoid 80 (RS) produces a torque larger than that of the electric motor if the size is the same. Further, there is no need of providing a reduction gear, and the device as a whole can be realized in a small size. Moreover, since the rotary solenoid 80 (RS) requires no reduction gears, the drive mechanism does not create resistance even when the shifting operation is quickly performed.

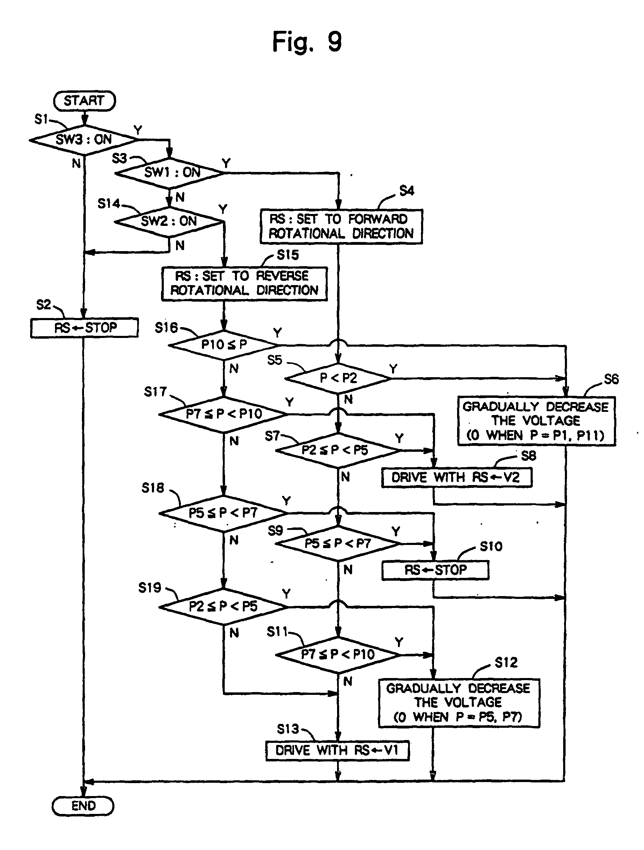

Next, the operation of the controller 10 for assisting the shifting operation during the speed-change operation will be described with reference to a flowchart shown in Fig. 9.

First, the controller 10 checks whether the clutch pedal switch 95 (SW3) has been turned on, i.e., whether the clutch pedal 94 has been depressed to disconnect the clutch (step S1). When the automatic clutch is mounted, it is checked whether the amount of engagement of the clutch is rather on the disconnected side than the partly-connected state of the clutch based on a signal from the clutch stroke sensor that detects the amount of engagement of the clutch. When the clutch pedal switch 95 (SW3) has not been turned on at step S1, the controller 10 judges that the driver is not willing to change the speed since the clutch has not been disconnected, and the routine proceeds to step S2 to end the operation by bringing the rotary solenoid 80 (RS) into a halt.

When the clutch pedal switch 95 (SW3) has been turned on at step S1, the controller 10 judges that the clutch has been disconnected and the driver is willing to change the speed, and the routine proceeds to step S3 where it is checked whether the first switch 41 (SW1) of the shift knob switch 4 is turned on, i.e., whether the operation has started to change the speed toward the first gear position, third gear position or fifth gear position. When the first switch 41 (SW1) has been turned on at step S3, the controller 10 proceeds to step S4 to set the rotary solenoid 80 (RS) to turn forward (to apply the voltage to the first coil 831 so that the first stator 811 becomes the N-pole and to apply the voltage to the second coil 832 so that the second stator 812 becomes the S-pole) and, then, proceeds to step S5 where it is checked whether the shift stroke position P detected by the shift stroke sensor 90 (SS) is smaller than P2, i.e., whether the clutch sleeve 252 is rather closer to the gear-engaging side than the rear end of the chamfer of the dog teeth 241a. When the shift stroke position P is smaller than P2 at step S5, the controller 10 judges that the clutch sleeve 252 is rather on the gear-engaging side than the rear end of the chamber of the dog teeth 241a and there is no need of assisting the shift. The routine then proceeds to step S6 where the voltage applied to the fist coil 831 and to the second coil 832 of the rotary solenoid 80 (RS) is gradually decreased, and the voltage is nullified (0) after the shift stroke position P has reached P1.

When the shift stroke position P is larger than P2 at step S5, the controller 10 proceeds to step S7 and checks whether the shift stroke position P is larger than P2 but is smaller than P5, i.e., whether the clutch sleeve 252 is in a range of from a position of starting the synchronization up to a position where the dog teeth engage with the chamfer. When the shift stroke position P is larger than P2 but is smaller than P5 at step S7, the controller 10 judges that the clutch sleeve 252 is in the range of from the position of starting the synchronization to the position where the dog teeth are engaged with the chamfer, and that the shifting must be assisted during the gear-engaging operation. The routine therefore proceeds to step S8 where the rotary solenoid 80 (RS) is driven with the voltage V2.

When the shift stroke position P is not larger than P2 or is not smaller than P5 at step S7, the controller 10 proceeds to step S9 and checks whether the shift stroke position P is larger than P5 but is smaller than P7, i.e., whether the clutch sleeve 252 is positioned between the two synchronizer rings 255 and 256. When the shift stroke position P is larger than P5 but is smaller than P7 at step 59, the controller 10 judges that the clutch sleeve 252 is positioned between the two synchronizer rings 255 and 256, and that there is no need to assist the shifting operation. The routine, then, proceeds to step S10 where the rotary solenoid 80 (RS) is brought into a halt.

When the shift stroke position P is not larger than P5 or is not smaller than P7 at step S9, the controller 10 proceeds to step S11 and checks whether the shift stroke position P is larger than P7 but is smaller than P10, i.e., whether the clutch sleeve 252 is disengaged from the dog teeth 242a and the gear-disengaging operation is completed. When the shift stoke position P is larger than P7 but is smaller than P10 at step S11, the controller 10 judges that the clutch sleeve 252 is disengaged from the dog teeth 242a and the gear-disengaging operation has been completed. The routine, then, proceeds to step S12 where the voltage applied to the rotary solenoid 80 (RS) is gradually decreased, and the voltage is nullified (0) after the shift stroke position P has reached P7.

When the shift stroke position P is not larger than P7 or is not smaller than P10 at step S11, the controller 10 judges that the clutch sleeve 252 is in mesh with the dog teeth 242a and that the shifting operation must be assisted during the gear-disengaging operation. The routine, therefore, proceeds to step S13 where the rotary solenoid 80 (RS) is driven with the voltage V1.

Next, described below is a case where the first switch 41 (SW1) of the shift knob switch 4 has not been turned on at step S3.

When the first switch 41 (SW1) of the shift knob switch 4 has not been turned on at step S3, the controller proceeds to step S14 and checks whether the second switch 42 (SW2) is turned on , i.e., whether the operation has started to change the speed toward the second gear position, fourth gear position or reverse gear position. When the second switch 42 (SW2) has not been turned on at step S14, the controller 10 judges that the driver is not willing to change the speed, and the routine proceeds to step S2 to end the operation by bringing the rotary solenoid 80 (RS) into a halt.

When the second switch 42 (SW2) has been turned on at step S14, the controller 10 proceeds to step S15 to set the rotary solenoid 80 (RS) to rotate in the reverse direction (to apply the voltage to the first coil 831 so that the first stator 811 becomes the S-pole and to apply the voltage to the second coil 832 so that the second stator 812 becomes the N-pole) and further proceeds to step S16 and checks whether the shift stroke position P detected by the shift stroke sensor 90 (SS) is larger than P10, i.e., whether the clutch sleeve 252 is rather on the gear-engaging side than the rear end of the chamfer of the dog teeth 242a. When the shift stroke position P is larger than P10 at step S16, the controller 10 judges that the clutch sleeve 252 is rather on the gear-engaging side than the rear end of the chamfer of the dog teeth 242a and that there is no need to assist the shifting. The routine then proceeds to step S6 where the voltage applied to the rotary solenoid 80 (RS) is gradually decreased, and the voltage is nullified (0) after the shift stroke position P has reached P11.

When the shift stroke position P is smaller than P10 at step S16, the controller 10 proceeds to step S17 and checks whether the shift stroke position P is larger than P7 but is smaller than P10, i.e., whether the clutch sleeve 252 is in a range of from a position for starting the synchronization to a position where the dog teeth engage with the chamfer. When the shift stroke position P is larger than P7 but is smaller than P10 at step S17, the controller 10 judges that the clutch sleeve 252 is in the range of from the position for starting the synchronization to the position where the dog teeth engage with the chamfer and that the shifting must be assisted during the gear-engaging operation. The routine, then, proceeds to step S8 where the rotary solenoid 80 (RS) is driven with the voltage V2.

When the shift stroke position P is not larger than P7 or is not smaller than P10 at step S17, the controller 10 proceeds to step S18 and checks whether the shift stroke position P is larger than P5 but is smaller than P7, i.e., whether the clutch sleeve 252 is positioned between the two synchronizer rings 255 and 256. When the shift stroke position P is larger than P5 but is smaller than P7 at step S18, the controller 10 judges that the clutch sleeve 252 is positioned between the two synchronizer rings 255 and 256 and that there is no need to assist the shifting operation. The routine, then, proceeds to step S10 where the rotary solenoid 80 (RS) is brought into a halt.

When the shift stroke position P is not larger than P5 or is not smaller than P7 at step S18, the controller 10 proceeds to step S19 and checks whether the shift stroke position P is larger than P2 but is smaller than P5, i.e., judges whether the clutch sleeve 252 is disengaged from the dog teeth 241a and the gear-disengaging operation is completed. When the shift stroke position P is larger than P2 but is smaller than P5 at step S19, the controller 10 judges that the clutch sleeve 252 is disengaged from the dog teeth 241a and that the gear-disengaging operation is completed. The routine, then, proceeds to step S12 where the voltage applied to the rotary solenoid 80 (RS) is gradually decreased, and the voltage is nullified (0) after the shift stroke position P has reached P5.

When the shift stroke position P is not larger than P2 or is not smaller than P5 at step S19, the controller 10 judges that the clutch sleeve 252 is in mesh with the dog teeth 241a and that the shifting must be assisted during the gear-disengaging operation. Therefore, the routine proceeds to step S13 where the rotary solenoid 80 (RS) is driven with the voltage V1.

In the foregoing was described the invention by way of an illustrated embodiment. The invention, however, is in no way limited to the above embodiment only but can be modified in a variety of other ways without departing from the scope of technical idea of the invention. In the illustrated embodiment, for example, the rotary solenoid 80 (RS) was controlled based upon the shift stroke position. The invention, however, can also be applied to a shift-assisting device in which the rotary solenoid 80 (RS) is controlled correspondingly to the force exerted on the speed-change lever at the time of the shifting operation.

Being constituted as described above, the shift-assisting device for a transmission of the invention exhibits action and effect as described below.

That is, according to the present invention, a rotary solenoid is employed for constituting a means for operating the shifting mechanism in the same direction as the direction in which the speed-change lever is shifted, and there is no need of providing a reduction gear. Therefore, the drive mechanism does not create resistance even when the shifting operation is quickly performed. Further, since in the rotary solenoid, attract or repel each other to produce the torque, the rotary solenoid produces a torque larger than that of an electric motor if the size is the same. Besides, since no reduction gear needs be provided, the device as a whole can be realized in a small size.

According to the present invention, further, the rotary solenoid is disposed on the same axis as that of a control rod mounting the shift lever of the shifting mechanism, and the rotor of the rotary solenoid is coupled to the control rod. Therefore, the coupling structure is simple, and the device as a whole is compactly constituted.

## Claims

1. A shift-assisting device for a transmission having a drive means for operating a shifting mechanism (6) in the same direction as the direction in which a speed-change lever (3) is shifted, said shifting mechanism (6) being coupled to said speed-change lever (3) to operate a synchronizing mechanism (25a, 25b, 25c) of the transmission, **characterised in that** said drive means is a rotary solenoid (80).

2. A shift-assisting device for a transmission according to claim 1, **characterised in that** said rotary solenoid (80) is disposed on the same axis as that of a control rod (63) mounting the shift lever (64) of said shifting mechanism (6), and the rotor (85) of said rotary solenoid (80) is coupled to said control rod (63).

## Patentansprüche

1. Schaltassistenzvorrichtung für ein Getriebe mit einer Antriebseinrichtung zum Betreiben eines Schaltmechanismus (6) in derselben Richtung, wie die Richtung, in der ein Schalthebel (3) bewegt wird, der Schaltmechanismus (6) ist mit dem Schalthebel (3) gekoppelt, um einen Synchronisiermechanismus (25a, 25b, 25c) des Getriebes zu betreiben,
**dadurch gekennzeichnet, dass**
die Antriebseinrichtung ein Dreh-Solenoid (80) ist.

2. Schaltassistenzvorrichtung für ein Getriebe nach Anspruch 1,
**dadurch gekennzeichnet, dass** der Dreh-Solenoid (80) auf derselben Achse angeordnet ist, wie jene der Steuerstange (63), an der die Schaltgabel (64) des Schaltmechanismus (6) angebracht ist, und der Rotor (85) des Dreh-Soldnoid (80) mit der Steuerstange (63) gekoppelt ist.

## Revendications

1. Commande de passage de vitesse assistée pour une transmission ayant un moyen de commande pour actionner un mécanisme de passage de vitesse (6) dans la même direction que la direction dans laquelle un levier de changement de vitesse (3) est actionné, ledit mécanisme de passage de vitesse (6) étant couplé au dit levier de changement de vitesse (3) pour actionner un mécanisme de synchronisation (25a, 25b, 25c) de la transmission, **caractérisée en ce que** ledit moyen de commande est un solénoïde rotatif (80).

2. Commande de passage de vitesse assistée pour une transmission selon la revendication 1, **caractérisée en ce que** ledit solénoïde rotatif (80) est disposé sur le même axe que celui d'une bielle de commande (63) montant le levier de passage de vitesse (64) dudit mécanisme de passage de vitesse (6), et le rotor (85) dudit solénoïde rotatif (80) est couplé à ladite bielle de commande (63).
